# EUROPÄISCHE PATENTSCHRIFT

(11) **EP 1 277 256 B1**
(45) Veröffentlichungstag und Bekanntmachung des Hinweises auf die Patenterteilung: **17.04.2013**
(21) Anmeldenummer: 01909312.9
(22) Anmeldetag: 05.03.2001
(51) Int. Cl.: H02B 1/16

(54) **VORRICHTUNG ZUR LÖSBAREN FESTLEGUNG EINER FRONTPLATTE AN EINER AUFLAGELEISTE EINES GEHÄUSES**
DEVICE FOR DETACHABLY FIXING A FRONT PANEL TO A BASE STRIP OF A HOUSING
DISPOSITIF PERMETTANT DE FIXER DE MANIERE AMOVIBLE UNE PLAQUE AVANT SUR UNE BARRE DE SUPPORT D'UN BOITIER

(30) Priorität: 17.04.2000 AT 6772000
(43) Veröffentlichungstag der Anmeldung: 22.01.2003
(73) Patentinhaber: Eaton Industries (Austria) GmbH, 1210 Wien (AT)
(72) Erfinder: GEGENBAUER, Bernhard, A-3830 Waidhofen/Thaya (AT); URBANEK, Harald, A-3943 Schrems (AT)
(74) Vertreter: Tabeling, Marcella M.J.
(86) Internationale Anmeldenummer: PCT/AT2001/000060
(87) Internationale Veröffentlichungsnummer: WO 2001/080388

(56) Entgegenhaltungen:
- EP-A- 0 466 264
- EP-A- 0 593 106
- US-A- 5 311 408

## Beschreibung

Die Erfindung betrifft eine Vorrichtung zur lösbaren Festlegung einer Frontplatte an einer Auflageleiste eines Gehäuses für elektrische/elektronische Geräte, insbesondere Schaltschrank-Geräte, wie Schutzschalter, Stromstoßschalter, Schütze od. dgl., umfassend eine Schraube, die eine Bohrung in der festzulegenden Frontplatte durchgreifend anordenbar ist.

Eine Frontplatte dient dazu, in einem Gehäuse für elektrisch/elektronische Geräte, insbesondere in einem Schaltschrank, die Bereiche zwischen den einzelnen Geräten, in welchen die Verbindungsleitungen zwischen diesen Geräten verlegt sind, sowie die Bereiche der Schraubklemmen dieser Geräte abzudecken. Derartige Frontplatten sind dazu in Gestalt ebener Panele ausgebildet und weisen im Bereich der nicht abzudeckenden Teile der Geräte entsprechend dimensionierte Durchbrechungen auf. Im Innenraum des Gehäuses sind parallel zu den Frontplatten verlaufende Auflageleisten vorgesehen, auf welchen diese Frontplatten aufgelegt und befestigt werden. Damit Geräte ausgetauscht bzw. Veränderungen in der Verdrahtung der Geräte vorgenommen werden können, ist die Befestigung der Frontplatten auf den Auflageleisten als lösbare Befestigung ausgeführt.

Diese Frontplatten können aus Metall oder Kunststoff bestehen. Kunststoff-Frontplatten können, da diese elektrisch isolierend sind, sehr einfach an besagten Auflageleisten angeschraubt oder angeklemmt werden. Häufig werden aber aus Stabilitätsgründen Metall-Frontplatten benötigt. Solche Metall-Frontplatten müssen aber aus sicherheitstechnischen Vorschriften elektrisch leitend mit dem Rest des Gehäuses verbunden sein, damit auch sie in die Schutzmaßnahme der Nullung miteinbezogen sind.

Die Metall-Frontplatten sind aus Oberflächenschutz- und optischen Gründen mit einer Lack- oder Pulverbeschichtung überzogen, welche Schutzschicht elektrisch isoliert und damit eine leitende Verbindung zum Rest des Gehäuses ohne zusätzliche Teile unmöglich macht, zumal auch die Auflageleisten im Gehäuse meist mit einer solchen Schicht überzogen sind.

Nach bisher bekanntem Stand der Technik wird dieses Problem meist mit Anschweißbolzen oder auf die Frontplatte aufgeschweißten Kontakten gelöst, die während des Lackier- oder Beschichtungsprozesses zur Aufbringen der besagten isolierenden Beschichtung auf die Frontplatte blank gehalten werden. An diese Kontakte muß ein am Gehäuse befestigtes Kabel angeschlossen werden, um die vorschriftsgemäße elektrisch leitende Verbindung zwischen der Frontplatte und dem Rest des Gehäuses herzustellen. Die mechanische Befestigung der Frontplatte an den Auflageleisten erfolgt über separate Teile wie Kunststoffschnellverschlüsse, Schrauben usw.

Diese Art der Befestigung von Frontplatten ist sehr aufwendig, weil zur Herstellung der elektrischen und der mechanischen Verbindung jeweils ein eigenes Verbindungsmittel benötigt wird. Zudem sind diese Befestigungen unsicher, da die Herstellung der elektrischen Verbindung möglicherweise vergessen werden könnte.

Eine weitere Befestigungsmöglichkeit stellt das direkte Verschrauben der Frontplatte mit den Auflageleisten mittels Blechschrauben und Zahnscheiben oder Ringschneiden dar: Dabei wird eine Zahnscheibe soweit auf den Schaft einer Blechschraube aufgefädelt, daß er zur Anlage am Schraubenkopf kommt. Die Blechschraube wird durch eine Bohrung in der Frontplatte, die größeren Durchmesser als der Schraubenschaft aufweist, hindurchgeführt und in eine Bohrung in der Auflageleiste eingeschraubt. Bei diesem Einschrauben kommt die Zahnscheibe mit ihren Schneiden an der isolierenden Beschichtung zur Anlage. Wird die Blechschraube noch weiter eingeschraubt, werden die Schneiden der Zahnscheibe in die Beschichtung eingedrückt bzw. durch diese Beschichtung hindurchgedrückt, sodaß sie Zahnscheiben-Schneiden letztendlich auf der Metalloberfläche der Frontplatte zur Anlage kommen. Damit ist eine elektrische Verbindung zwischen der Auflageleiste und der Frontplatte hergestellt, welche über den Schraubenschaft, den Schraubenkopf und die Zahnscheibe führt. Ein Beispiel für ein solche Methode wird z.B. in EP 466 264 gezeigt. Nachteilig ist bei dieser Methode einerseits, daß ihr Anwendungsgebiet auf Frontplatten mit relativ dünnen Beschichtungen eingeschränkt ist, weil die Schneiden von Zahnscheiben nur dünne Beschichtungen zuverlässig durchdringen können. Ein weiterer Nachteil besteht andererseits darin, daß für jede Befestigungsstelle ein Bohrung in den Auflageleisten des Gehäuses gesetzt werden muß.

Es ist Aufgabe der vorliegenden Erfindung, eine Vorrichtung der eingangs angeführten Art anzugeben, bei welcher diese Nachteile vermieden sind, d.h. mittels welcher die vorschriftsgemäße elektrische Verbindung der Frontplatte mit der Auflageleiste des Gehäuses unabhängig von der Stärke der isolierenden Beschichtung der metallischen Frontplatte herstellbar ist und welche eine Festlegung der Frontplatte auch an ungebohrten Auflageleisten ermöglicht.

Erfindungsgemäß wird dies erreicht durch eine elektrisch leitende, in wesentlichen rechteckige und aus einem elastisch federnden Material gebildete Platte, mit deren mittleren Abschnitt der Schaft der Schraube in Wirkverbindung steht und deren den Breitseitenkanten benachbarten Abschnitte in Richtung des Kopfes der Schraube gebogen sind und durch einen an der Frontplatte festlegbaren Führungsteil umfassend zumindest eine, sich parallel zum Schaft der Schraube erstreckende Führungswand, an welcher die Breitseitenkante der Platte anliegt.

Beim Anziehen der Schraube wird die Platte auf den Schraubenkopf zu bewegt, wobei sich deren Breitseitenkanten an die isolierende Beschichtungen von Frontplatte und Auflageleiste anlegen bzw. bei weiter fortschreitendem Anziehen der Schraube diese Beschichtungen abschaben und so auf den metallischen Grundkörpern von Auflageleiste und Frontplatte zur Anlage kommen. Die über das Anziehen der Schraube ausübbaren Kräfte reichen aus, um selbst dicke Beschichtungen abzuschaben, womit die geforderte elektrische Verbindung zuverlässig herstellbar ist.

Die erfindungsgemäß vorgesehene Platte greift an der Oberfläche der Auflageleiste an, weshalb diese zwecks Festlegung einer Frontplatte in keiner Weise bearbeitet werden muß, insbesondere nicht mit einer Bohrung versehen zu werden braucht.

Es kann vorgesehen sein, daß in den mittleren Abschnitt der Platte ein Innengewinde geschnitten ist, in welches der Schaft der Schraube eingreift.

Damit brauchen keine, zur Platte hinzutretenden Bauteile zur Herstellung der Wirkverbindung zwischen Platte und Schraube vorgesehen sein, was zu einem besonders geringen Herstellungsaufwand führt.

Bevorzugterweise wird allerdings vorgesehen, daß in den mittleren Abschnitt der Platte eine Durchbrechung eingebracht ist, deren lichte Weite größer ist als der Durchmesser des Schrauben-Schaftes und daß ein mit einem Innengewinde versehenes, mit der Platte verdrehsicher verbindbares Gewindeplättchen vorgesehen ist, in welches Innengewinde der Schaft der Schraube eingreift, wobei die Platte zwischen dem Schraubenkopf und dem Gewindeplättchen auf den Schraubenschaft aufgefädelt ist.

Da die Platte hier nicht mit einem Innengewinde versehen zu werden braucht, kann diese sehr dünn ausgeführt werden, wodurch sie ohne besondere Nachbearbeitung scharfe Breitseitenkanten bekommt. Scharfe Breitseitenkanten führen dazu, daß die isolierenden Beschichtungen besonders gut abgeschabt werden, wodurch die zu erreichende elektrische Verbindung zwischen der Platte und dem Metall der Frontplatte und der Auflageleiste besonders zuverlässig hergestellt wird.

In diesem Zusammenhang kann vorgesehen sein, daß das Gewindeplättchen an seiner der Platte zugewandten Oberfläche zumindest eine stiftartige Anformung und die Platte zumindest eine weitere Durchbrechung zur Aufnahme der stiftartigen Anformung aufweist. Die notwendige verdrehsichere Verbindung zwischen Platte und Gewindeplättchen kann hiermit ohne zusätzliche Werkstoffe und Arbeitsschitte, wie z.B. Verkleben, Verschweißen, Verlöten od. dgl., hergestellt werden.

In weiterer Ausgestaltung der Erfindung kann vorgesehen sein, daß der Führungsteil einen in die Bohrung der Frontplatte einsetzbaren Sockel aufweist, auf dessen erster Stirnseite die zumindest eine Führungswand festgelegt ist.

Die Führungswand ist damit besonders einfach an der Frontplatte festlegbar.

Weiters kann vorgesehen sein, daß am Sockel des Führungsteiles zwei zueinander planparallel verlaufende Führungswände festgelegt sind, welche in einem etwa der Breite der Platte entsprechenden Abstand voneinander angeordnet sind, in welchem Abstand die Platte aufgenommen ist.

Dies ergibt eine besonders zuverlässige, insbesondere verkantungsfreie Führung der Platte bzw. des Gewindeplättchens während des Verdrehens der Schraube.

In Weiterbildung der Erfindung kann vorgesehen sein, daß an den freien, vom Sockel beabstandeten Enden der Führungswände sich in den Abstand zwischen den Führungswänden hineinerstreckende Anschläge festgelegt sind.

Damit kann verhindert werden, daß sich Platte und Gewindeplättchen zu weit vom Schraubenkopf entfernen und sich vom Schaft der Schraube lösen.

Als günstig hat es sich erwiesen, daß in zumindest eine Führungswand eine sich parallel zum Schaft der Schraube erstreckende Nut eingelassen ist und daß an den mittleren Abschnitt der Platte eine hinsichtlich ihres Querschnittes dem Querschnitt der Nut entsprechende Führungsnase angeformt ist, welche in der Nut geführt ist.

Damit wird eine besonders gute und verkantungsfreie Führung von Platte und Gewindeplättchen erreicht.

Gemäß einer bevorzugten Ausführungsform der Erfindung kann vorgesehen sein, daß auf der zweiten Stirnseite des Sockels ein an die äußere Oberfläche der Frontplatte anlegbarer Flansch festgelegt ist.

Der Führungsteil wird beim Anziehen der Schraube über diesen Flansch an die Frontplatte angepreßt, womit gesonderte Maßnahmen zur Befestigung des Führungsteiles an der Frontplatte eingespart werden können.

In diesem Zusammenhang hat es sich als besonders vorteilhaft erwiesen, daß an der Mantelfläche des Sockels federnde Rastnasen vorgesehen sind, weil hiermit der Führungsteil auch ohne Schraube an der Frontplatte unverlierbar gehalten wird.

In weiterer Ausgestaltung der Erfindung kann vorgesehen sein, daß auf der dem Sockel abgewandten Oberfläche des Flansches zumindest ein Griffstück zur händischen Verdrehung des Führungsteiles angeordnet ist.

Bei mittels dieses Griffstückes erfolgender Verdrehung des Führungsteiles wird die Platte außer Eingriff bzw. in Eingriff mit der Auflageleiste gebracht. Damit kann bei der Montage der Frontplatte diese sehr einfach -nämlich durch entsprechendes Verdrehen des Führungsteiles- provisorisch festgelegt werden, sodaß der Monteur zur endgültigen Fixierung der Frontplatte an der Auflageleiste (durch Anziehen der Schraube) beide Hände frei hat. Bei der Demontage der Frontplatte kann zunächst bedenkenlos die Schraube gelockert werden, und durch Verdrehen des Führungsteiles die Frontplatte endgültig und in genau vorhersehbarer Weise von den Auflageleisten gelöst werden.

Weiters kann vorgesehen sein, daß auf der dem Sockel abgewandten Oberfläche des Flansches eine hohlzylindrische Aufnahme für den Kopf der Schraube festgelegt ist.

Dieser Bauteil führt die Schraube, sodaß diese problemlos in jede Richtung verdreht werden kann.

In diesem Zusammenhang kann vorgesehen sein, daß an der Innenwandung der Aufnahme zumindest ein, in ihren Innenraum hineinragender Anschlag vorgesehen ist.

Hiermit wird ein Herausfallen und ein Verlieren der Schraube verhindert.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig.1 einen Schaltschrank ohne Fronttür in perspektivischer Ansicht;
Fig.2a die erfindungsgemäße Vorrichtung in einer einfachen Ausführungsform, angebracht an einer Frontplatte 3 bzw. Anschlagleiste 6;
Fig.2b die Vorrichtung gemäß Fig.2a in derselben Darstellung bei gegenüber Fig.2a weiter angezogener Schraube 7;
Fig.3 eine Explosionszeichnung der Komponenten einer besonders bevorzugten Ausführungsform der erfindungsgemäßen Vorrichtung;
Fig.4 die Platte 8 und das Gewindeplättchen 12 der Vorrichtung gemäß Fig.3 im Schrägriß;
Fig.5 die Ausführungsform der Fig.3,4 angebracht an einer Frontplatte 3 bzw. Auflageleiste 6 im Schnitt;
Fig.6 die Ausführungsform der Fig.3-5 angebracht an einer Frontplatte 3 in perspektivischer Ansicht;
Fig.7 der Führungsteil 11 der Ausführungsform der Fig.3-6 allein in perspektivischer Ansicht von unten und
Fig.8 der Führungsteil 11 der Ausführungsform der Fig.3-7 allein in perspektivischer Ansicht von oben.

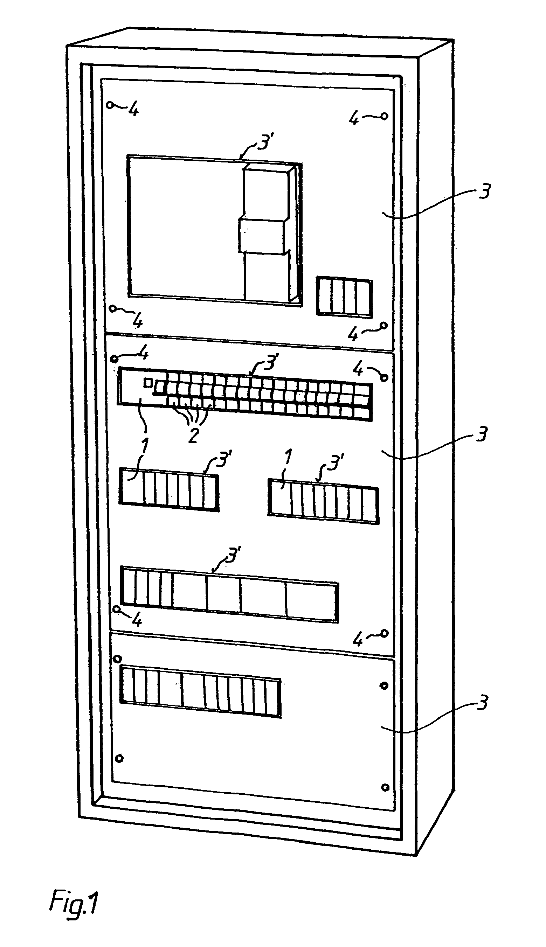

In Fig.1 ist ein herkömmlicher Schaltschrank dargestellt, in welchem diverse Schaltschrank-Geräte, wie Schutzschalter (FI-Schutzschalter 1 und Leitungsschutzschalter 2), Stromstoßschalter, Schütze od. dgl. angeordnet sind. Diese Schaltschrank-Geräte sind auf in Fig.1 nicht sichtbaren, in horizontaler Richtung verlaufenden Schienen festgelegt.

Die Bereiche zwischen den einzelnen Geräten werden -nachdem alle Geräte ordnungsgemäß eingebaut und verdrahtet worden sind- mittels Frontplatten 3 abgedeckt. Dies sind ebene Panele, welche schlitzartige Ausnehmungen 3' aufweisen, durch welche die Geräte abschnittsweise -in der Regel mit einem ein Bedienungselement, wie Schalthebel, aufweisenden Abschnitt- hindurchragen und für eine Betätigung (manuelle Ein- oder Aussschaltung) zugänglich sind.

Die Erfindung bezieht sich auf eine Vorrichtung zur lösbaren Festlegung einer Frontplatte 3 an einer Auflageleiste 6 eines Gehäuses für elektrische/elektronische Geräte, welches Gehäuse vorzugsweise ein Schaltschrank der in Fig.1 dargestellten Art sein kann. Die Erfindung ist aber nicht auf die Anwendung in einem Schaltschrank eingeschränkt, sondern kann vielmehr in jedem beliebigen Gehäuse für elektrische/elektronische Geräte zum Einsatz kommen.

In Fig.1 sind diese Vorrichtungen durch Schrauben 4 gebildet, welche durch in die Frontplatten 3 eingelassene Bohrungen 5 hindurch geführt sind und deren gewindete Schäfte in die unterhalb der Frontplatten 3 liegenden Auflageleisten 6 eingreifen. Diese Ausführung der Vorrichtung ist bereits bekannter Stand der Technik.

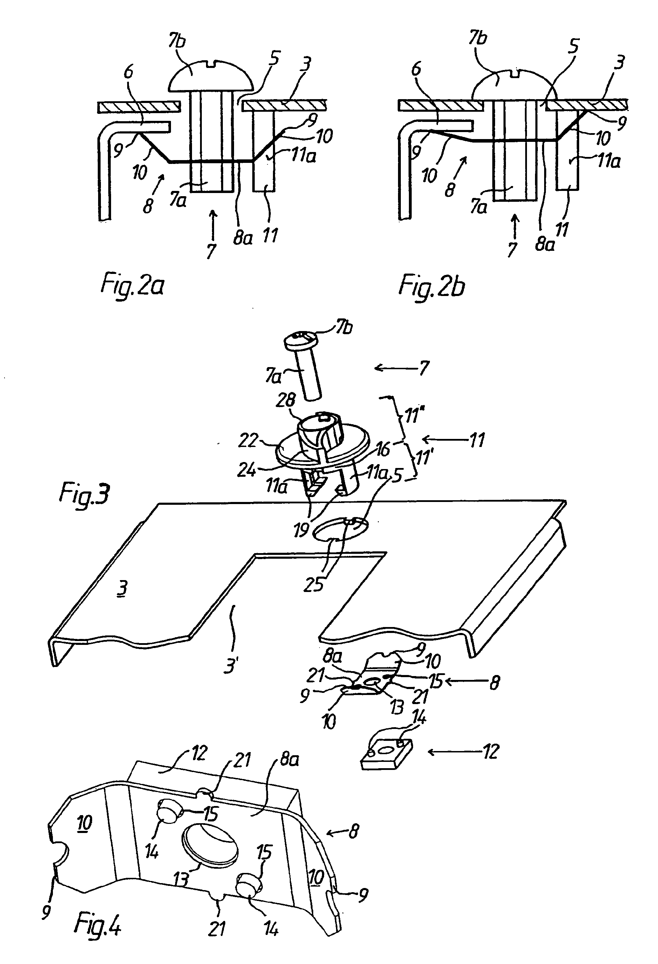

Eine erfindungsgemäße Vorrichtung zu lösbaren Festlegung einer Frontplatte 3 an einer Auflageleiste 6, welche anstelle der Schrauben 4 der Fig.1 eingesetzt werden kann, ist in einer besonders einfachen Ausführungsform in Fig.2a,b dargestellt, wobei zwecks Erläuterung seiner Funktion diese Vorrichtung hier bereits mit einer Frontplatte 3 bzw. einer Auflageleiste 6 in Eingriff stehend dargestellt ist. Der Schutzumfang der beigeschlossenen Ansprüche bezieht sich dessenungeachtet auf die Vorrichtung selbst und ist von Frontplatte 3 und Auflageleiste 6 unabhängig.

Die erfindungsgemäße Vorrichtung umfaßt eine Schraube 7, die eine Bohrung 5 in der festzulegenden Frontplatte 3 durchgreifend anordenbar ist, bzw. in Fig.2 schon dort angeordnet ist. Besagte Bohrung 5 ist so in der Frontplatte 3 zu plazieren, daß sie unmittelbar benachbart zur Auflageleiste 6 liegt.

Desweiteren ist eine elektrisch leitende, in wesentlichen rechteckige und aus einem elastisch federnden Material, vorzugsweise Metall, gebildete Platte 8 vorgesehen, mit deren mittleren Abschnitt 8a der Schaft 7a der Schraube 7 in Wirkverbindung steht. Dieses In-Wirkverbindung-Stehen kann beispielsweise dadurch realisiert sein, daß in den mittleren Abschnitt 8a ein Innengewinde geschnitten ist, in welches der gewindete Schaft 7a der Schraube 7 eingreift. Beim Drehen der Schraube 7 wird die Platte 8 auf den Schraubenkopf 7b zu bewegt. Dieser Effekt wird auch dann erreicht, wenn eine Schraubenmutter auf das freie Ende des Schraubenschaftes 7a aufgeschraubt ist, wobei diese Mutter unbeweglich gegenüber der Schraube 7 gehalten sein muß, was beispielsweise durch Verkleben mit dem mittleren Abschnitt 8a der Platte 8 erfolgen kann.

Die den Breitseitenkanten 9 benachbarten Abschnitte 10 der Platte 8 sind in Richtung des Kopfes 7b der Schraube 7 gebogen. Wird die Platte 8 durch Drehen der Schraube 7 in Richtung des Schraubenkopfes 7b verschoben, kommt die erste Breitseitenkante 9 zur Anlage an der Auflageleiste 6 und die zweite Breitseitenkante 9 zur Anlage an der inneren Oberfläche der Frontplatte 3 (vgl. Fig.2b). Beim weiter fortschreitenden Drehen der Schraube 7 wird der mittlere Abschnitt 8a der Platte 8 immer weiter auf den Schraubenkopf 7b zubewegt, wodurch die gebogenen Abschnitte 10 der Platte 8 in Richtung der Ebene des mittleren Abschnittes 8a verformt werden. Dabei schrammen die Breitseitenkanten 9 entlang der Oberflächen von Frontplatte 3 und Auflageleiste 6, schaben eine dort befindliche elektrisch isolierende Beschichtung, wie insbesondere eine Lackschicht, ab und kommen an der die Frontplatte 3 bzw. an der die Auflageleiste 6 ausmachenden Metallplatte zur Anlage. Da die Platte 8 selbst aus leitendem Material besteht, wird so eine elektrische Verbindung zwischen Auflageleiste 6 und Frontplatte 3 hergestellt, wobei diese beiden Teile gleichzeitig mechanisch miteinander verbunden, nämlich miteinander verklemmt werden.

Aus diesen Ausführungen ergibt sich, daß die erfindungsgemäße Vorrichtung vorzugsweise zur Festlegung von metallischen Frontplatten 3 eingesetzt wird, weil nur im Zusammenhang mit solchen Frontplatten 3 -wie eingangs bereits erwähnt- aus sicherheitstechnischen Gründen vorgeschrieben ist, daß die Frontplatte 3 auch elektrisch leitend mit den Auflageleisten 6 zu verbinden ist. Dessenungeachtet ist die Erfindung aber auch zur Festlegung von aus isolierendem Material, insbesondere aus Kunststoff, hergestellten Frontplatten 3 geeignet, weil sie auch bei diesen eine zuverlässige mechanische Verbindung zwischen Frontplatte 3 und Auflageleiste 4 herstellt.

Damit beim Verdrehen der Schraube 7 die Platte 8 unverdrehbar gegenüber dieser gehalten wird, was Voraussetzung für die erörterte Annäherung der Platte 8 an den Schraubenkopf 7b durch Drehen der Schraube 7 ist, ist ein an der Frontplatte 3 festlegbarer -bzw. in beigeschlossenen Zeichnungsfiguren schon an der Frontplatte 3 festgelegter- Führungsteil 11 vorgesehen. Dieser weist eine, sich parallel zum Schaft 7a der Schraube 7 erstreckende Führungswand 11a auf und ist so angeordnet, daß eine Längsseitenkante der Platte 8 an dieser anliegt und während des Drehens der Schraube 7 an dieser Führungswand 11a entlang gleitet. Der Führungsteil 11 wirkt damit als Anschlag für die Platte 8 und verhindert eine Verdrehung derselben.

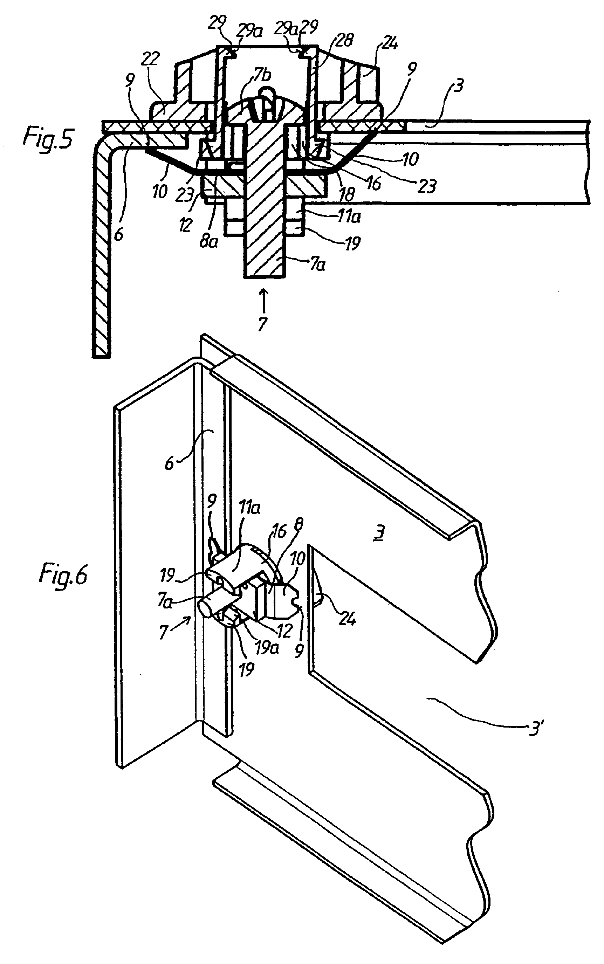

In den Fig.3-8 ist eine besonders bevorzugte Ausführungsform der erfindungsgemäßen Vorrichtung zur lösbaren Festlegung einer Frontplatte 3 an einer Auflageleiste 6 dargestellt: Wie aus Fig.3-5 hervorgeht, ist hier das Einwirken des Schraubenschaftes 7a auf den mittleren Abschnitt 8a der Platte 8 mit einem Gewindeplättchen 12 realisiert, das mit einem dem Schraubengewinde entsprechenden Innengewinde versehen ist, in welches Innengewinde der Schaft 7a der Schraube 7 eingreift. In den mittleren Abschnitt 8a der Platte 8 ist eine Durchbrechung 13 eingebracht, deren lichte Weite (geringfügig) größer ist als der Durchmesser des Schrauben-Schaftes 7a. Die Platte 8 ist auf den Schraubenschaft 7a aufgefädelt (vgl. auch Fig.5) und das Gewindeplättchen 12 auf den Schraubenschaft 7a aufgeschraubt, wobei die Platte 8 zwischen dem Schraubenkopf 7b und dem Gewindeplättchen 12 zu liegen kommt.

Die verdrehsichere Verbindung des Gewindeplättchens 12 mit der Platte 8 wird erreicht durch zumindest eine stiftartige Anformung 14, die das Gewindeplättchen 12 an seiner der Platte 8 zugewandten Oberfläche aufweist. Bei der Ausführungsform der beigeschlossenen Zeichnungen sind zwei derartige Anformungen 14 vorgesehen, wobei deren Anzahl nicht erfindungswesentlich ist und deshalb verändert werden kann. In die Platte 8 sind zu diesen Anformungen 14 korrespondierende weitere Durchbrechungen 15 eingearbeitet, welche so plaziert sind, daß die Anformungen 14 des Gewindeplättchens 12 von ihnen aufgenommen werden können (vgl. Fig.4).

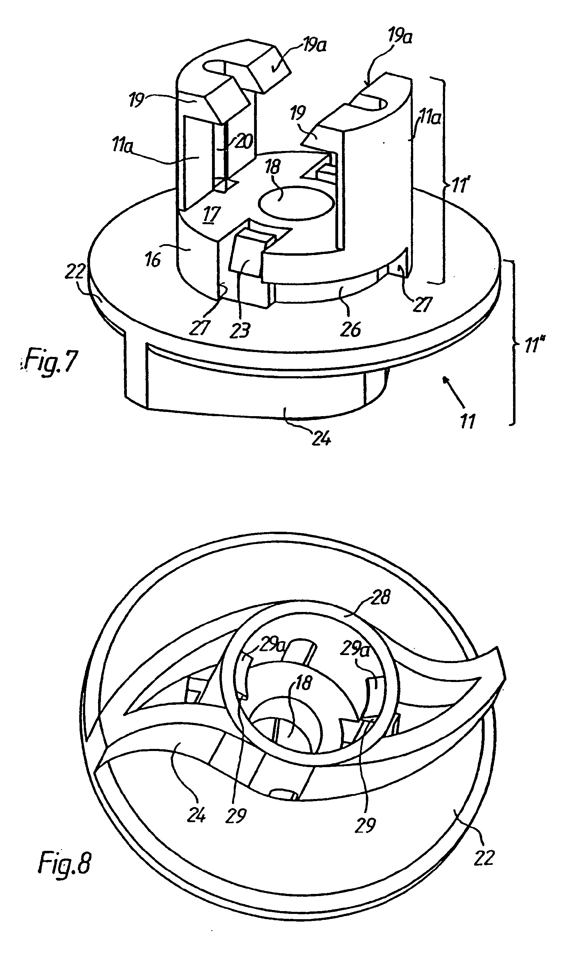

Der Führungsteil 11 hat hier einen komplexeren Aufbau als jener der Fig.2a,b. Er umfaßt zunächst einen innerhalb der Frontplatte 3 liegenden Abschnitt 11' (vgl. auch Fig.7), auf welchen zuerst eingegangen wird:
Der Führungsteil 11 weist hier einen in die Bohrung 5 der Frontplatte 3 einsetzbaren Sockel 16 auf, auf dessen erster Stirnseite 17 die zumindest eine Führungswand 11a festgelegt ist. Die Festlegung des Sockels 16 in der Bohrung 5 kann beliebig realisiert sein, beispielsweise durch Verklebung, durch Preßpassung od. dgl. Damit die Schraube 7 bei in die Bohrung 5 der Frontplatte 3 eingesetztem Sockel 16 durch die Bohrung 5 hindurch geführt werden kann, ist in den Sockel 16 eine Bohrung 18 eingebracht, deren Durchmesser (geringfügig) größer ist als jener des Schraubenschaftes 7a, aber kleiner ist, als jener des Schraubenkopfes 7b.

Wie aus den Fig.5-7 hervorgeht, sind am Sockel 16 des Führungsteiles 11 zwei zueinander planparallel verlaufende Führungswände 11 a festgelegt, welche in einem etwa der Breite der Platte 8 entsprechenden Abstand voneinander angeordnet sind. Die Platte 8 ist im Abstand zwischen diesen beiden Führungswänden 11a aufgenommen, womit sich die Platte 8 weder beim Anziehen noch beim Lösen der Schraube 7 gegenüber der Schraube 7 verdrehen kann. Das Gewindeplättchen 12 wird vorzugsweise mit derselben Breite wie die Platte 8 ausgebildet, womit auch dieses Gewindeplättchen 12 zur Anlage an den beiden parallelen Führungswänden 11 a kommt.

An den freien, vom Sockel 16 beabstandeten Enden der Führungswände 11a sind sich in den Abstand zwischen den Führungswänden 11a hineinerstreckende Anschläge 19 festgelegt. Beim Lösen der Schraube 7 werden Gewindeplättchen 12 und Platte 8 vom Kopf 7b der Schraube 7 entfernt, wobei die besagten Anschläge 19 in die Bewegungsbahn von Gewindeplättchen 12 und Platte 8 hineinragen und deren größtmöglichen Abstand zum Schraubenkopf 7b vorgeben.

Damit Platte 8 und Gewindeplättchen 12 trotz dieser Anschläge 19 durch Parallelverschiebung in Richtung des Schraubenschaftes 7a (beispielsweise durch Aufschrauben des Gewindeplättchens 12 auf den Schraubenschaft 7a und anschließendes Drehen der Schraube 7) in den Abstand zwischen den beiden Führungswänden 11a einbringbar sind, weisen die Anschläge 19 Schrägflächen 19a auf, durch welche sich die Anschläge 19 trichterartig erweitern. Beim Einbringen der Platte 8 und des Gewindeplättchens 12 in den Abstand zwischen den beiden Führungswänden 11a kommen die Längsseitenkanten dieser beiden Komponenten an diesen Schrägflächen 19a zur Anlage und gleiten an diesen entlang, wodurch die freien Enden der Führungswände 11a voneinander wegbewegt werden. Sobald Gewindeplättchen 12 und Platte 8 die Anschläge 19 passiert haben, schnappen die Führungswände 11a von ihren ausgelenkten in die in Fig.7 dargestellten Positionen zurück, wodurch ein Zurückbewegen von Gewindeplättchen 12 und Platte 8 hinter die Anschläge 19 nicht mehr möglich ist.

In zumindest eine Führungswand 11a, vorzugsweise jedoch in beide Führungswände 11 a, ist jeweils eine sich parallel zum Schaft 7a der Schraube 7 erstreckende Nut 20 eingelassen. An den mittleren Abschnitt 8a der Platte 8 ist eine hinsichtlich ihres Querschnittes dem Querschnitt der Nut 20 entsprechende Führungsnase 21 angeformt, welche in der Nut 20 eingreift und in dieser geführt ist.

Das Funktionsprinzip dieser bevorzugten Ausführungsform ist ident mit jenem der Ausführungsform nach Fig.2a,b. Beim Anziehen der Schraube 7 kommt hier allerdings der Schraubenkopf 7b nicht unmittelbar an der Frontplatte 3, sondern am Sockel 16 im unmittelbar an die Bohrung 18 anschließenden Bereich zur Anlage. Da aber der Sockel 16 mit der Frontplatte 3 verbunden ist, stützt sich der Schraubenkopf 7b letztendlich indirekt an der Frontplatte 3 ab, während die Platte 8 beim Drehen der Schraube 7 vom Schraubenschaft 7a auf den Schraubenkopf 7b zu bewegt wird und dabei in der erörterten Weise die Frontplatte 3 elektrisch und mechanisch mit der Auflageleiste 6 verbindet.

Bei der in den Fig.3-8 dargestellten bevorzugten Ausführungsform ist die Verbindung des Sockels 16 mit der Frontplatte 3 mittels eines auf der zweiten Stirnseite des Sockels 16 festgelegten Flansches 22 realisiert. Dieser Flansch 22 sowie alle auf seiner, dem Sockel 16 gegenüberliegenden Oberfläche festgelegten, weiter unter noch zu beschreibenden Bauteile, bilden den außerhalb der Frontplatte 16 liegenden Abschnitt 11" des Führungsteiles 11. Dieser vorzugsweise kreisrund ausgebildete Flansch 22 hat einen größeren Durchmesser als die Bohrung 5 und ist damit an die äußere Oberfläche der Frontplatte 3 anlegbar. Beim Anziehen der Schraube 7 und dem damit einhergehenden Anlegen der Breitseitenkanten 9 an die innere Oberfläche der Frontplatte 3 bzw. an die Auflageleiste 6 wird der Flansch 22 gegen die Frontplatte 3 gepreßt und dadurch an ihr festgelegt. Eine gesonderte Verbindung des Sockels 16 mit der Frontplatte 3 (durch Verkleben, Verpressen od. dgl.) kann damit entfallen. Damit der Sockel 16 vorläufig auch bei nicht eingesetzter oder gelockerter Schraube 7 in der Bohrung 5 fixiert ist, sind an der Mantelfläche des Sockels 16 federnde Rastnasen 23 vorgesehen. Wie aus Fig.5 hervorgeht, ist bei in die Bohrung 5 eingesetztem Sockel 16 der Bohrungs-Berandungs-Bereich der Frontplatte 3 zwischen diesen Rastnasen 23 und dem Flansch 22 angeordnet, wodurch ein Herausfallen des Führungsteiles 11 aus der Bohrung 5 auch bei gelockerter Schraube 7 verhindert ist.

Der durch das Vorsehen des Flansches 22 erreichte Entfall einer festen Verbindung von Sockel 16 und Frontplatte 3 wird wie folgt vorteilhaft ausgenutzt:
Auf der dem Sockel 16 abgewandten Oberfläche des Flansches 22 ist ein Griffstück 24 zur händischen Verdrehung des Führungsteiles 11 angeordnet. Wie am besten aus Fig.6 hervorgeht, führt eine Verdrehung des gesamten Führungsteiles 11 dazu, daß (über die Führungswände 11a) Gewindeplättchen 12 und Platte 8 verdreht werden. Bei einem Verdrehwinkel von 90° gegenüber der in Fig.6 dargestellten Position verläuft die Längsachse der Platte 8 etwa parallel zur Auflageleiste 6, wobei der in Fig.6 an der bzw. knapp über der Auflageleiste 6 liegende Abschnitt 10 ebenfalls über der Frontplatte 3 zu liegen kommt und damit außer Eingriff mit der Auflageleiste 6 steht. Die Frontplatte 6 kann jetzt aus dem Gehäuse entfernt werden.

Umgekehrt gestaltet sich auch die Montage der Frontplatte 3 im Gehäuse sehr einfach: Der Führungsteil 11 wird bereits vor Einbringung der Frontplatte 3 ins Gehäuse in die Frontplatte 3 eingesetzt (dies kann bereits vom Hersteller der Frontplatte 3 gemacht werden) und um 90° gegenüber der in Fig.6 dargestellten Position verdreht, wodurch die Frontplatte 3 unbehindert an die Auflageleiste 6 angelegt bzw. dort anliegend in die richtige Stellung verschoben werden kann. Nach Erreichen der richtigen Stellung wird die eine bzw. werden die mehreren, in der Frontplatte 3 eingesetzten erfindungsgemäßen Vorrichtungen mittels der Griffstücke 24 um 90° verdreht, wodurch die Platte 8 wie in Fig.6 dargestellt, zur (lockeren) Anlage an der Auflageleiste 6 kommt und ein Herausfallen der Frontplatte 3 verhindert. Durch Anziehen der Schrauben 7 erfolgt die endgültige und sichere Fixierung der Frontplatte 3 an der Auflageleiste 6.

Um zu erreichen, daß der Führungsteil 11 nicht beliebig weit, sondern nur um die zur Erreichung der eben erörterten Schnell-Fixier-Funktion notwendigen 90° verschwenkt werden kann, sind an die grundsätzlich kreisförmig ausgeführte Berandung der Bohrung 5 zwei, 180° zueinander versetzte und in die Bohrung 5 hineinragende Vorsprünge 25 angeformt. In die Mantelfläche des Sockels 16 sind zu diesen Vorsprüngen 25 korrespondierende, sich etwa über 90° des Sockelmantels erstreckende Einkerbungen 26 eingebracht, innerhalb welcher die Vorsprünge 25 bei in die Bohrung 5 eingesetztem Sockel 16 zu liegen kommen. Bei Verdrehung des Führungsteiles 11 kommen die Vorsprünge 25 an den radial verlaufenden Begrenzungswänden 27 der Einkerbungen 26 zur Anlage, wodurch der mögliche Verdrehwinkel des Führungsteiles 11 begrenzt ist.

Auf der dem Sockel 16 abgewandten Oberfläche des Flansches 22 ist eine hohlzylindrische Aufnahme 28 für den Kopf 7b der Schraube 7 festgelegt. Um zu verhindern, daß die Schraube 7 -solange auf ihren Schaft 7a das Gewindeplättchen 12 noch nicht aufgeschraubt ist- aus dieser Aufnahme 28 herausfällt, ist an der Innenwandung der Aufnahme 28 zumindest ein, in ihren Innenraum hineinragender Anschlag 29 vorgesehen.

Wie aus Fig.8 hervorgeht, sind beim bevorzugten Ausführungsbeispiel zwei solche Anschläge 29 vorgesehen, die 180° zueinander versetzt angeordnet sind. Damit die Schraube 7 in die Aufnahme 28 eingebracht und durch die Bohrung 18 des Sockels 16 hindurch geführt werden kann, weisen diese Anschläge 29 -analog zu den Anschlägen 19- Schrägflächen 29a auf, an welchen die Schraubenköpfe 7b beim Einsetzen in die Aufnahme 28 abrutschen.

Die Gestalt der Platte 8 wurde in der vorstehenden Beschreibung sowie in den angeschlossenen Ansprüchen als "im wesentlichen rechteckig" definiert. Hierunter ist zu verstehen, daß die Platte 8 längliche Gestalt aufweist, sodaß sie in den in Fig.2a,b, 5 und 6 dargestellten Positionen gleichzeitig an der Auflageleiste 6 und der Frontplatte 3 anliegen kann, bei Verdrehung um 90° jedoch außer Eingriff mit der Auflageleiste 6 kommt. Dies wird auch dann erreicht, wenn die Platte 8 nicht exakt die Form eines Rechteckes aufweist, sondern geringfügig von dieser Gestalt abweist, etwa indem sie sich im Bereich ihrer Breitseitenkanten 9 etwas verbreitert oder -so wie in den Fig.3-8 vorgesehen- etwas verschmälert. Auch derartige, von der Rechteckform etwas abweichende Gestaltungen der Platte 8 fallen in den Rahmen dieser Erfindung und der beigeschlossenen Ansprüche.

Der Führungsteil 11 ist aus einem isolierenden Kunststoff hergestellt, vorzugsweise spritzgegossen, wobei sämtliche Teile, welche dieser gemäß der obigen Beschreibung aufweisen kann, einstückig ausgeführt sind und demgemäß in einem einzigen Spritzgußvorgang hergestellt werden.

## Patentansprüche

1. Vorrichtung zur lösbaren Festlegung einer Frontplatte (3) an einer Auflageleiste (6) eines Gehäuses für elektrische/elektronische Geräte, insbesondere Schaltschrank-Geräte, wie Schutzschalter, Stromstoßschalter, Schütze od. dgl., umfassend eine Schraube (7), die eine Bohrung (5) in der festzulegenden Frontplatte (3) durchgreifend anordenbar ist, **gekennzeichnet durch** eine elektrisch leitende, in wesentlichen rechteckige und aus einem elastisch federnden Material gebildete Platte (8), mit deren mittleren Abschnitt (8a) der Schaft (7a) der Schraube (7) in Wirkverbindung steht und deren den Breitseitenkanten (9) benachbarten Abschnitte (10) in Richtung des Kopfes (7b) der Schraube (7) gebogen sind und **durch** einen an der Frontplatte (3) festlegbaren Führungsteil (11) umfassend zumindest eine, sich parallel zum Schaft (7a) der Schraube (7) erstreckende Führungswand (11a), an welcher eine Längsseitenkante der Platte (8) anliegt.

2. Vorrichtung nach Anspruch 1, **dadurch gekennzeichnet, daß** in den mittleren Abschnitt (8a) der Platte (8) ein Innengewinde geschnitten ist, in welches der Schaft (7a) der Schraube (7) eingreift.

3. Vorrichtung nach Anspruch 1, **dadurch gekennzeichnet, daß** in den mittleren Abschnitt (8a) der Platte (8) eine Durchbrechung (13) eingebracht ist, deren lichte Weite größer ist als der Durchmesser des Schrauben-Schaftes (7a) und daß ein mit einem Innengewinde versehenes, mit der Platte (8) verdrehsicher verbindbares Gewindeplättchen (12) vorgesehen ist, in welches Innengewinde der Schaft (7a) der Schraube (7) eingreift, wobei die Platte (8) zwischen dem Schraubenkopf (7b) und dem Gewindeplättchen (12) auf den Schraubenschaft (7a) aufgefädelt ist.

4. Vorrichtung nach Anspruch 3, **dadurch gekennzeichnet, daß** das Gewindeplättchen (12) an seiner der Platte (8) zugewandten Oberfläche zumindest eine stiftartige Anformung (14) und die Platte (8) zumindest eine weitere Durchbrechung (15) zur Aufnahme der stiftartigen Anformung (14) aufweist.

5. Vorrichtung nach einem der vorstehenden Ansprüche, **dadurch gekennzeichnet, daß** der Führungsteil (11) einen in die Bohrung (5) der Frontplatte (3) einsetzbaren Sockel (16) aufweist, auf dessen erster Stirnseite (17) die zumindest eine Führungswand (11a) festgelegt ist.

6. Vorrichtung nach Anspruch 5, **dadurch gekennzeichnet, daß** am Sockel (16) des Führungsteiles (11) zwei zueinander planparallel verlaufende Führungswände (11a) festgelegt sind, welche in einem etwa der Breite der Platte (8) entsprechenden Abstand voneinander angeordnet sind, in welchem Abstand die Platte (8) aufgenommen ist.

7. Vorrichtung nach Anspruch 6, **dadurch gekennzeichnet, daß** an den freien, vom Sockel (16) beabstandeten Enden der Führungswände (11a) sich in den Abstand zwischen den Führungswänden (11a) hineinerstreckende Anschläge (19) festgelegt sind.

8. Vorrichtung nach Anspruch 5 oder 6, **dadurch gekennzeichnet, daß** in zumindest eine Führungswand (11a) eine sich parallel zum Schaft (7a) der Schraube (7) erstreckende Nut (20) eingelassen ist und daß an den mittleren Abschnitt (8a) der Platte (8) eine hinsichtlich ihres Querschnittes dem Querschnitt der Nut (20) entsprechende Führungsnase (21) angeformt ist, welche in der Nut (20) geführt ist.

9. Vorrichtung nach einem der Ansprüche 5 bis 9, **dadurch gekennzeichnet, daß** auf der zweiten Stirnseite des Sockels (16) ein an die äußere Oberfläche der Frontplatte (3) anlegbarer Flansch (22) festgelegt ist.

10. Vorrichtung nach Anspruch 9, **dadurch gekennzeichnet, daß** an der Mantelfläche des Sockels (16) federnde Rastnasen (23) vorgesehen sind.

11. Vorrichtung nach Anspruch 9 oder 10, **dadurch gekennzeichnet, daß** auf der dem Sockel (16) abgewandten Oberfläche des Flansches (22) zumindest ein Griffstück (24) zur händischen Verdrehung des Führungsteiles (11) angeordnet ist.

12. Vorrichtung nach Anspruch 9, 10 oder 11, **dadurch gekennzeichnet, daß** auf der dem Sockel (16) abgewandten Oberfläche des Flansches (22) eine hohlzylindrische Aufnahme (28) für den Kopf (7b) der Schraube (7) festgelegt ist.

13. Vorrichtung nach Anspruch 12, **dadurch gekennzeichnet, daß** an der Innenwandung der Aufnahme (28) zumindest ein, in ihren Innenraum hineinragender Anschlag (29) vorgesehen ist.

## Claims

1. Apparatus for detachably fixing a front panel (3) to a support strip (6) of a housing for electrical/electronic devices, in particular switch cabinet devices, such as safety switches, impulse switches, contactors or the like, comprising a screw (7) which can be arranged such that it engages through a hole (5) in the front panel (3) that is to be fixed, **characterised by** an electrically conductive, substantially rectangular panel (8) made of an elastically resilient material, the central portion (8a) of which is operatively connected to the shaft (7a) of the screw (7) and the portions (10) of which that are adjacent to the broadside edges (9) are bent towards the head (7b) of the screw (7), and by a guide part (11) which can be fixed to the front panel (3) and comprises at least one guide wall (11 a) extending parallel to the shaft (7a) of the screw (7), against which guide wall a longitudinal side edge of the panel (8) rests.

2. Apparatus according to claim 1, **characterised in that** an internal thread, in which the shaft (7a) of the screw (7) engages, is cut in the central portion (8a) of the panel (8).

3. Apparatus according to claim 1, **characterised in that** an opening (13), the inner width of which is larger than the diameter of the screw shaft (7a), is made in the central portion (8a) of the panel (8), and **in that** a small threaded plate (12) is provided, which is provided with an internal thread and can be connected to the panel (8) in a manner locked against rotation, in which internal thread the shaft (7a) of the screw (7) engages, the panel (8) being threaded onto the screw shaft (7a) between the screw head (7b) and the small threaded plate (12).

4. Apparatus according to claim 3, **characterised in that** the small threaded plate (12) comprises, on the surface thereof facing the panel (8), at least one peg-like integral formation (14), and the panel (8) comprises at least one further opening (15) for receiving the peg-like integral formation (14).

5. Apparatus according to any of the preceding claims, **characterised in that** the guide part (11) comprises a base (16) which can be inserted into the hole (5) in the front panel (3), on the first end face (17) of which base the at least one guide wall (11 a) is fixed.

6. Apparatus according to claim 5, **characterised in that** two guide walls (11 a) are fixed to the base (16) of the guide part (11), extend plane-parallel to one another and are arranged with spacing from one another which corresponds approximately to the width of the panel (8), in which spacing the panel (8) is received.

7. Apparatus according to claim 6, **characterised in that** stops (19) which extend into the spacing between the guide walls (11a) are fixed to the free ends of the guide walls (11 a), which ends are spaced apart from the base (16).

8. Apparatus according to either claim 5 or claim 6, **characterised in that** a groove (20) which extends parallel to the shaft (7a) of the screw (7) is formed in at least one guide wall (11a), and **in that** a guide projection (21), which in terms of its cross-section corresponds to the cross-section of the groove (20), is integrally formed on the central portion (8a) of the panel (8) and is guided in the groove (20).

9. Apparatus according to any of claims 5 to 9, **characterised in that** a flange (22) which can be applied to the external surface of the front panel (3) is fixed on the second end face of the base (16).

10. Apparatus according to claim 9, **characterised in that** resilient latching projections (23) are provided on the outer face of the base (16).

11. Apparatus according to either claim 9 or claim 10, **characterised in that** at least one handle piece (24) for manual rotation of the guide part (11) is arranged on the surface of the flange (22) facing away from the base (16).

12. Apparatus according to claim 9, 10 or 11, **characterised in that** a hollow-cylindrical seat (28) for the head (7b) of the screw (7) is fixed on the surface of the flange (22) facing away from the base (16).

13. Apparatus according to claim 12, **characterised in that** at least one stop (29) is provided on the inner wall of the seat (28) and projects into the interior thereof.

## Revendications

1. Dispositif permettant de fixer de manière amovible une plaque frontale (3) à une barre de support (6) d'un boîtier pour appareils électriques/- électroniques, en particulier des appareils d'armoire de distribution, notamment des disjoncteurs de protection, des commutateurs à impulsion, des contacteurs-disjoncteurs ou analogues, comprenant une vis (7), qui peut être agencée de manière à passer à travers un alésage (5) ménagé dans la plaque frontale (3) à fixer, **caractérisé par** une plaque (8) conductrice de l'électricité, sensiblement rectangulaire et formée d'un matériau élastique, avec la section moyenne (8a) de laquelle la tige (7a) de la vis (7) coopère et dont les sections (10) voisines des bords côté large (9) sont incurvées dans la direction de la tête (7b) de la vis (7), et par une partie de guidage (11) fixable sur la plaque frontale (3) comprenant au moins une paroi de guidage (11a) s'étendant parallèlement à la tige (7a) de la vis (7), paroi sur laquelle s'applique un bord côté long de la plaque (8).

2. Dispositif selon la revendication 1, **caractérisé en ce qu'**il est découpé dans la section moyenne (8a) de la plaque (8) un filet interne, sur lequel la tige (7a) de la vis (7) s'engage.

3. Dispositif selon la revendication 1, **caractérisé en ce qu'**il est ménagé dans la section moyenne (8a) de la plaque (8) un perçage (13), dont l'écartement est plus grand que le diamètre de la tige (7a) de la vis et **en ce qu'**il est prévu une plaquette filetée qui est pourvue d'un filet interne et peut se raccorder à la plaque (8) de manière solidaire en rotation, filet interne sur lequel la tige (7a) de la vis (7) s'engage, la plaque (8) entre la tête de vis (7b) et la plaquette filetée (12) étant enfilée sur la tige de vis (7a).

4. Dispositif selon la revendication 3, **caractérisé en ce que** la plaquette filetée (12) présente sur sa surface tournée vers la plaque (8) au moins une moulure en forme de broche (14) et la plaque (8) au moins un autre perçage (15) pour recevoir la moulure en forme de broche (14).

5. Dispositif selon l'une quelconque des revendications précédentes, **caractérisé en ce que** la partie de guidage (11) présente un culot (16) qui peut être inséré dans l'alésage (5) de la plaque frontale (3), sur le premier côté frontal (17) duquel la au moins une paroi de guidage (11a) est fixée.

6. Dispositif selon la revendication 5, **caractérisé en ce que**, sur le culot (16) de la partie de guidage (11), sont fixées deux parois de guidage (11a) s'étendant plan-parallèles l'une à l'autre, lesquelles parois sont agencées à distance mutuelle correspondant plus ou moins à la largeur de la plaque (8), distance à laquelle la plaque (8) est reçue.

7. Dispositif selon la revendication 6, **caractérisé en ce que**, sur les extrémités libres des parois de guidage (11a) distancées du culot (16), sont fixées des butées (19) qui s'étendent intérieurement à la distance comprises entre les parois de guidage (11a).

8. Dispositif selon la revendication 5 ou la revendication 6, **caractérisé en ce qu'**une encoche (20) s'étendant parallèlement à la tige (7a) de la vis (7) est emboîtée dans au moins une paroi de guidage (11a) et **en ce qu'**un ergot de guidage (21) correspondant en matière de section transversale à celle de l'encoche (20) est formé sur la section moyenne (8a) de la plaque (8), lequel ergot est guidé dans l'encoche (20).

9. Dispositif selon l'une quelconque des revendications 5 à 9, **caractérisé en ce qu'**une bride (22) applicable sur la surface externe de la plaque frontale (3) est fixée sur le second côté frontal du culot (16).

10. Dispositif selon la revendication 9, **caractérisé en ce que** des ergots d'encliquetage élastiques (23) sont prévus sur la surface d'enveloppe du culot (16).

11. Dispositif selon la revendication 9 ou la revendication 10, **caractérisé en ce qu'**au moins une pièce de préhension (24) pour faire tourner à la main la partie de guidage (11) est aménagée sur la surface de la bride (22) opposée au culot (16).

12. Dispositif selon la revendication 9, 10 ou 11, **caractérisé en ce qu'**un logement cylindrique creux (28) pour la tête (7b) de la vis (7) est fixée sur la surface de la bride (22) opposée au culot (16).

13. Dispositif selon la revendication 12, **caractérisé en ce qu'**il est prévu sur la paroi interne du logement (28) au moins une butée (29) qui fait saillie dans son espace intérieur.
